(19) Europäisches Patentamt
European Patent Office
Office européen des brevets

(11) Veröffentlichungsnummer: **0 345 486 B1**

# (12) EUROPÄISCHE PATENTSCHRIFT

(45) Veröffentlichungstag der Patentschrift: **20.01.93**

(51) Int. Cl.⁵: **C08L 77/06**

(21) Anmeldenummer: **89108671.2**

(22) Anmeldetag: **13.05.89**

## (54) Thermoplastische Formmassen.

(30) Priorität: **20.05.88 DE 3817279**

(43) Veröffentlichungstag der Anmeldung:
**13.12.89 Patentblatt 89/50**

(45) Bekanntmachung des Hinweises auf die Patenterteilung:
**20.01.93 Patentblatt 93/03**

(84) Benannte Vertragsstaaten:
**BE DE ES FR GB NL**

(56) Entgegenhaltungen:
**EP-A- 0 070 001**
**DE-A- 3 218 017**
**US-A- 4 410 661**

**PATENT ABSTRACTS OF JAPAN, Band 12, Nr. 5 (C-467)[2852], 8. Januar 1988, Seite 162 C 467; & JP-A-62 164 762 (TORAY IND. INC.) 21-07-1987**

(73) Patentinhaber: **BASF Aktiengesellschaft**
**Carl-Bosch-Strasse 38**
**W-6700 Ludwigshafen(DE)**

(72) Erfinder: **Pipper, Gunter**
**Schlangenthaler Weg 10**
**W-6702 Bad Dürkheim(DE)**
Erfinder: **Matthies, Hans Georg, Dr.**
**Homburger Strasse 2**
**W-6700 Ludwigshafen(DE)**
Erfinder: **McKee, Graham Edmund, Dr.**
**Kastanienweg 8**
**W-6940 Weinheim(DE)**
Erfinder: **Theysohn, Rainer, Dr.**
**Am Bruch 38**
**W-6710 Frankenthal(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thermoplastische Formmassen, enthaltend

a) 2 bis 95 Gew.% eines amorphen teilaromatischen Copolyamids mit einer relativen Viskosität von 1,4 bis 3,4 (1-vol.%ige Lösung in 96-gew.%iger Schwefelsäure bei 23 °C) aus

| | |
|---|---|
| α) 30 bis 98 mol-% | Isophthalsäure und |
| β) 2 bis 70 mol-% | Terephthalsäure einerseits und |
| γ) 40 bis 98 mol-% | Hexamethylendiamin, |
| δ) 2 bis 60 mol-% | eines Bis-[4-amino(alkylcyclohexyl)]-methans oder eines Bis-[4-amino-(alkylcyclohexyl)]-2,2-propans andererseits, |

b) 5 bis 98 Gew.% eines thermoplastischen teilkristallinen Polyamids und

c) 0 bis 60 Gew.% eines kautschukelastischen Polymeren.

Außerdem betrifft die Erfindung die Verwendung derartiger Formmassen zur Herstellung von Formkörpern und aus den Formmassen hergestellte Formkörper.

Thermoplastische Formmassen auf der Basis von Polyamiden und weiteren Komponenten zählen zu den seit langem bekannten technischen Kunststoffen und haben auf vielen Gebieten Anwendung gefunden. Mischungsverhältnisse sowie die einzelnen Mischungskomponenten und der Zusatz von üblichen weiteren Bestandteilen wie Füllstoffen bestimmen bekanntlich die Eigenschaften der daraus hergestellten Formkörper, wie Lösungsmittelbeständigkeit, Spannungsrißbeständigkeit und die Feuchtigkeitsempfindlichkeit.

Für einige Einsatzzwecke wäre es jedoch wünschenswert, wenn die Wärmeformbeständigkeit der Polyamide weiter verbessert werden könnte, ohne daß die mechanischen Eigenschaften hierunter leiden.

Die unter Verwendung von Bis-[4-amino(alkylcyclohexyl)]-alkanen erhältlichen Copolyamide und Polyamide sind allgemein bekannt, z.B. aus der EP-A-10 308, der DE-A-36 00 015 und der EP-A-01 968.

Mischungen teilkristalliner Polyamide mit diesen Copolyamiden sind in der EP-A-70 001 beschrieben, wobei das amorphe Copolyamid Isophthalsäure, Terephthalsäure, Hexamethylendiamin und Bis-[4-amino-(cyclohexyl)]-methan als wesentliche Bestandteile aufweist.

Die Eigenschaften der daraus erhältlichen Formkörper lassen jedoch hinsichtlich ihrer Weiterverarbeitung, z.B. im Spritzgußverfahren (Entformbarkeit), zu wünschen übrig.

In der EP-A-73036 sind thermoplastische Formmassen beschrieben, die aus teilkristallinen und amorphen Polyamiden sowie einem Kautschukanteil bestehen. In den amorphen Copolyamiden sind als wesentliche Bestandteile Isophthalsäure, Terephthalsäure, Hexamethylendiamin sowie Bis-[4-amino(cyclohexyl)]-methan bekannt.

Die aus diesen Mischungen herstellbaren Formkörper weisen keine optimalen Eigenschaften auf, da es zu schichtweisen Spaltungen (Delaminierungen) in den Formkörpern kommen kann und da diese Formkörper häufig nicht formbeständig sind.

Der Erfindung lag daher die Aufgabe zugrunde, Formmassen aus Mischungen teilkristalliner Polyamide mit amorphen, teilaromatischen Polyamiden und gewünschtenfalls einem schlagzäh modifizierendem Kautschuk zur Verfügung zu stellen, die gute mechanische Eigenschaften aufweisen und zu Formkörpern hoher Produktqualität verarbeitbar sind.

Erfindungsgemäß wird diese Aufgabe durch die eingangs definierten thermoplastischen Formmassen gelöst.

Als Komponente (a) enthalten die erfindungsgemäßen Formmassen amorphe, teilaromatische Copolyamide in einer Menge von 2 bis 95, bevorzugt 20 bis 80 Gew.%.

Diese enthalten als wesentliche Bestandteile 30 bis 98, vorzugsweise 30 bis 70 mol-% Isophthalsäure, 2 bis 70, vorzugsweise 30 bis 70 mol-% Terephthalsäure, 50 bis 98, vorzugsweise 60 bis 90 mol-% Hexamethylendiamin und 2 bis 60, vorzugsweise 10 bis 40 mol-% eines Diamins der Formel

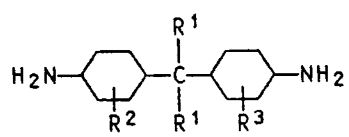

in der $R^1$ Wasserstoff oder die Methylgruppe bedeutet und in der $R^2$ eine $C_1$-$C_4$-Alkylgruppe und $R^3$ Wasserstoff oder eine $C_1$-$C_4$-Alkylgruppe bedeutet. Bevorzugte Alkylgruppen sind die Ethylgruppe und vor allem die Methylgruppe,

Die Summe der Molprozente der Diaminkomponenten beträgt, wie sich aus der Definition ergibt, 100 %.

Die amorphen Copolyamide (a) haben eine relative Viskosität, gemessen in einer 1 vol.-%igen Lösung

in 96 gew.%iger Schwefelsäure bei 23 °C von 1,4 bis 3,4, vorzugsweise 1,5 bis 2,8.

Die Herstellung der Polyamide (a) erfolgt vorzugsweise durch kontinuierliche Polykondensationsverfahren, wie sie in den EP-A-129 195 und EP-A-129 196 beschrieben sind.

Hierbei wird die wäßrige Salzlösung aus stöchiometrischen Mengen an Dicarbonsäuren und Diaminen, jeweils im gewünschten Mengenverhältnis, bei 50 bis 100 °C kontinuierlich in eine rohrförmige mit Füllkörpern versehene Vorkondensationszone geleitet. Dort wird die wäßrige Salzlösung im ersten Drittel unter gleichzeitiger Verdampfung von Wasser und Bildung eines Präpolymeren bei einem Druck von etwa 1 bis 10 bar auf eine Temperatur von 250 bis 320 °C erhitzt. Vorteilhaft wendet man einen Druck von 2 bis 8 bar an und erhitzt auf eine Temperatur von 280 bis 310 °C. Es versteht sich, daß die angewandte Temperatur über dem Schmelzpunkt der jeweils herzustellenden Polymeren liegt. Im ersten Drittel der Vorkondensationszone wird soviel Wärme zugeführt, daß ein Umsetzungsgrad von mindestens 93 % erreicht wird.

In den restlichen zwei Dritteln der Vorkondensationszone werden das Präpolymere und die Dampfphase intensiv miteinander in Berührung gebracht, indem man z.B. das dampfförmig entweichende Wasser zurückführt und mehrmals wieder durch die Reaktionszone leitet, um die im Wasserdampf enthaltenen Diamine an die Polykondensationsschmelze abzugeben.

Die Verweilzeit beträgt in der Regel 1 bis 45 Minuten, insbesondere 3 bis 20 Minuten.

Das aus der Vorkondensationszone austretende zweiphasige Gemisch aus Dämpfen und Präpolymeren wird getrennt, wonach das Präpolymere zu einem Polymeren höheren Polykondensationsgrades umgesetzt wird.

Das kontinuierliche Verfahren zur Herstellung der Polyamide (a) zeichnet sich dadurch aus, daß die Bereitung der eingesetzten Diaminlösung relativ wenig Wasser erfordert, wodurch sich besonders hohe Raum-Zeit-Ausbeuten ergeben.

Das erhaltene Präpolymere, das entsprechend seinem Umsetzungsgrad aus niedermolekularem Polyamid und restlichen Mengen der nichtumgesetzten Salze besteht, hat in der Regel eine relative Viskosität von 1,2 bis 2,0. Dieses wird in eine Polymerisationszone geleitet und bei einer Temperatur von 250 bis 320 °C, insbesondere 280 bis 310 °C, bei einem Druck von 1 bis 10 bar, insbesondere 2 bis 8 bar, polykondensiert. Das so erhaltene Polyamid weist in der Regel eine relative Viskosität von 1,9 bis 2,3 auf.

Als Komponente (b) enthalten die erfindungsgemäßen Formmassen teilkristalline Polyamide in einer Menge von 5 bis 98, vorzugsweise 20 bis 80 Gew.%.

Derartige Polyamide sowie Verfahren zu ihrer Herstellung sind allgemein bekannt und in der Literatur beschrieben.

Sie können z.B. durch Kondensation äquimolarer Mengen einer gesättigten Dicarbonsäure mit 4 bis 12 Kohlenstoffatomen mit einem Diamin, welches 4 bis 14 Kohlenstoffatome aufweist oder durch Kondensation von ω-Aminocarbonsäuren oder Polyaddition von Lactamen hergestellt werden.

Beispiele für Polyamide sind Polyhexamethylenadipinsäureamid (Nylon-66), Polyhexamethylenazelainsäureamid (Nylon-69), Polyhexamethylensebacinsäureamid (Nylon-610), Polyhexamethylendodecandisäureamid (Nylon-12) und die durch Ringöffnung von Lactamen erhaltenen Polyamide wie Polycaprolactam und Polylaurinsäurelactam.

In der Regel sind diese teilkristallinen Polyamide linear.

Besonders bevorzugte Polyamide sind Polyhexamethylenadipinsäureamid, Polyhexamethylensebacinsäureamid und Polycaprolactam.

Die Polyamide (b) weisen im allgemeinen eine relative Viskosität von 2,0 bis 5 auf, bestimmt in einer 1 vol.-%igen Lösung von 96 gew.%iger Schwefelsäure bei 23 °C, was einem Molekulargewicht (Gewichtsmittelwert) von etwa $10^4$ bis $5 \cdot 10^4$ entspricht.

Polyamide mit einer relativen Viskosität von 2,4 bis 4,5, insbesondere von 2,5 bis 3,5, werden bevorzugt verwendet.

Als Komponente (c) enthalten die erfindungsgemäßen thermoplastischen Formmassen 0 bis 60, vorzugsweise 10 bis 40 Gew.% eines kautschukelastischen Polymerisats.

Im allgemeinen handelt es sich dabei um Copolymerisate, die bevorzugt aus mindestens zwei der folgenden Monomeren als Hauptkomponenten aufgebaut sind: Ethylen, Propylen, Butadien, Isobuten, Isopren, Chloropren, Vinylacetat, Styrol, Acrylnitril und Acryl- und Methacrylsäureester mit 1 bis 18 C-Atomen in der Alkoholkomponente.

Kautschuke dieser Art sind z.B. im Houben-Weyl, Methoden der organischen Chemie, Bd. 14/1 (Thieme-Verlag, Stuttgart, 1961), Seiten 392 bis 406 und in der Monographie von C.B. Bucknall, "Toughened Plastic" (Applied Science Publishers, London, 1977) beschrieben.

Bevorzugte Arten von solchen Elastomeren sind die sog. Ethylen-Propylen-(EPM)-bzw. Ethylen-Propylen-Dien-(EPDM)-Kautschuke, die vorzugsweise ein Verhältnis von Ethyleneinheiten zu Propyleneinheiten im Bereich von 40:60 bis 90:10 aufweisen.

Die Mooney-Viskositäten (MLI + 4/100 ° C) solcher unvernetzten EPM-bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100 ° C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexa-1,5-dien-5-ethylidennorbornen und Dicyclopentadien. Der Diengehalt der EPDM-Kautschuke beträgt vorzugsweise 0,5 bis 50, insbesondere 1 bis 8 Gew.%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltenden Monomere enthalten. Diese Dicarbonsäurederivate bzw. Epoxygruppen enthaltenden Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

$R_1C(COOR_2) = C(COOR_3)R_4$ (I)

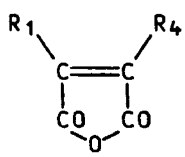

(II)

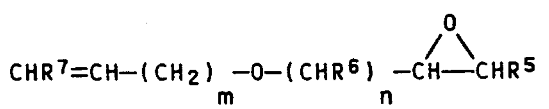

(III)

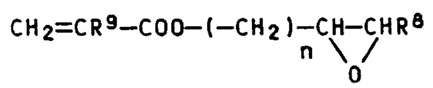

(IV)

wobei $R^1$ - $R^9$ Wasserstoff oder Alkylgruppen mit 1 bis 6 C-Atomen darstellen und m eine ganze Zahl von 0 bis 20, n eine ganze Zahl von 0 bis 10 und p eine ganze Zahl von 0 bis 5 ist.

Vorzugsweise bedeuten die Reste $R^1$ bis $R^7$ Wasserstoff, wobei m für 0 oder 1 und n für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wobei Glycidylacrylat, Glycidylmethacrylat und die Ester mit tertiären Alkoholen, wie t-Butylacrylat besonders bevorzugt werden. Letztere weisen zwar keine freien Carboxylgruppen auf, kommen in ihrem Verhalten aber den freien Säuren nahe und werden deshalb als Monomere mit latenten Carboxylgruppen bezeichnet.

Der Ethylengehalt der Copolymeren liegt im allgemeinen im Bereich von 50 bis 98 Gew.%, und der Anteil an Methacrylsäureestern zwischen 2 und 50 Gew.%. Vorteilhaft bestehen die Copolymeren aus 50 bis 98 Gew.% Ethylen, 0,1 bis 20 Gew.% Epoxygruppen enthaltenden Monomeren und/oder Methacrylsäure und/oder Säureanhydridgruppen enthaltenden Monomeren sowie der restlichen Menge an Methacrylsäureestern.

Besonders bevorzugt sind Copolymerisate aus

| | |
|---|---|
| 50 bis 98, | insbesondere 60 bis 95 Gew.% Ethylen, |
| 0,1 bis 40, | insbesondere 0,3 bis 20 Gew.% Glycidylacrylat und/oder Glycidylmethacrylat, Acrylsäure und/oder Maleinsäureanhydrid, und |
| 1 bis 45, | insbesondere 10 bis 35 Gew.% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Der Schmelzindex der Ethylencopolymeren liegt im allgemeinen im Bereich von 1 bis 80 g/10 min (gemessen bei 190 ° C und 2,16 kg Belastung).

Bevorzugte Elastomere (c) sind Emulsionspolymerisate, deren Herstellung z.B. in Houben-Weyl, Methoden der organischen Chemie, Band XII. I (1961) sowie bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0 ° C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20 ° C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel

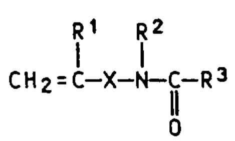

eingeführt werden können,
wobei die Substituenten folgende Bedeutung haben können:

- $R^1$ Wasserstoff oder eine $C_1$-$C_4$-Alkylgruppe,
- $R^2$ Wasserstoff, eine $C_1$-$C_8$-Alkylgruppe oder eine Arylgruppe, insbesondere Phenyl,
- $R^3$ Wasserstoff, eine $C_1$-$C_{10}$-Alkyl-, eine $C_6$-$C_{12}$-Arylgruppe oder $-OR^4$,
- $R^4$ eine $C_1$-$C_8$-Alkyl- oder $C_6$-$C_{12}$-Arylgruppe, die gegebenenfalls mit O- oder N-haltigen Gruppen substituiert sein können,
- X eine chemische Bindung, eine $C_1$-$C_{10}$-Alkylen- oder $C_6$-$C_{12}$-Arylengruppe oder

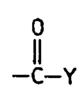

Y O-Z- oder NH-Z und

Z eine $C_1$-$C_{10}$-Alkylen- oder $C_6$-$C_{12}$-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktiven Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente (c) bis zu 5 Gew.%, vorzugsweise nicht mehr als 3 Gew.%, bezogen auf (c).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| A | Buta-1,3-dien, Isopren, n-Butylacrylat, Ethylhexylacrylat oder deren Mischungen | Styrol, Acrylnitril, Methylmethacrylat |
| B | wie A aber unter Mitverwendung von Vernetzern | wie A |
| C | wie A oder B | n-Butylacrylat, Ethylacrylat, Methylacrylat, Buta-1,3-dien, Isopren, Ethylhexylacrylat |
| D | wie A oder B | wie A oder C aber unter Mitverwendung von Monomeren mit reaktiven Gruppen wie hierin beschrieben |
| E | Styrol, Acrylnitril, Methylmethacrylat oder deren Mischungen | erste Hülle aus Monomeren wie unter A und B für den Kern beschrieben zweite Hülle wie unter A oder C für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere (c) können auch nach anderen üblichen Verfahren, z.B. durch Suspensionspolymerisation, hergestellt werden.

Selbstverständlich können auch Mischungen der vorstehend aufgeführten Kautschuktypen eingesetzt werden.

Die erfindungsgemäßen Formmassen können 0 bis 50 Gew.% eines faser- oder teilchenförmigen Zusatzstoffes oder Mischungen solcher Füllstoffe enthalten.

Als faserförmige Füllstoffe seien hier nur beispielsweise Glasfasern, Kohlenstoff-Fasern, Aramid-Fasern, Kaliumtitanatfasern und faserförmige Silikate wie Wollastonit genannt.

Bei der Verwendung von Glasfasern können diese zur besseren Verträglichkeit mit dem Polyamid mit einer Schlichte und einem Haftvermittler ausgerüstet sein.

Im allgemeinen haben die verwendeten Glasfasern einen Durchmesser im Bereich von 6 - 20 µm. Die Einarbeitung kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 5 mm.

Als teilchenförmige Füllstoffe seien hier nur stellvertretend Glaskugeln, teilchenförmiger Wollastonit, Quarzmehl, Bornitrid, Kaolin, Calciumcarbonat, Magnesiumcarbonat (Kreide) und Titandioxid genannt, wovon Wollastonit, Titandioxid und Kaolin im allgemeinen bevorzugt werden.

Neben den wesentlichen Komponenten (a), (b) und (c) können die erfindungsgemäßen Formmassen übliche Zusatzstoffe und Verarbeitungshilfsmittel enthalten. Deren Anteil beträgt im allgemeinen bis zu 20, vorzugsweise bis zu 10 Gew.%, bezogen auf das Gesamtgewicht der Komponenten (a) bis (c).

Übliche Zusatzstoffe sind beispielsweise Stabilisatoren und Oxidationsverzögerer, Flammschutzmittel, Mittel gegen Wärmezersetzung und Zersetzung durch ultraviolettes Licht, Gleit- und Entformungsmittel, Färbemittel, Farbstoffe, Pigmente und Weichmacher.

Oxidationsverzögerer und Wärmestabilisatoren, die den thermoplastischen Massen gemäß der Erfindung zugesetzt werden können, sind z.B. Halogenide von Metallen der Gruppe I des periodischen Systems, z.B. Natrium-, Kalium-, Lithium-Halogenide, ggf. in Verbindung mit Kupfer-(I)-Halogeniden, z.B. Chloriden, Bromiden oder Iodiden. Ferner sind sterisch gehinderte Phenole, Hydrochinone, substituierte Vertreter dieser Gruppe und Mischungen derselben, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2,0 Gew.% eingesetzt werden.

Gleit- und Entformungsmittel, die in der Regel in Mengen bis zu 1 Gew.% der thermoplastischen Masse zugesetzt werden, sind Stearinsäuren, Stearylalkohol, Stearinsäurealkylester und -amide sowie Ester des Pentaerythrits mit langkettigen Fettsäuren.

Die erfindungsgemäßen thermoplastischen Formmassen zeichnen sich durch gute mechanische Eigenschaften, insbesondere eine hohe Schlagzähigkeit, bei sehr guter Wärmeformbeständigkeit aus. Die Widerstandsfähigkeit gegen Feuchtigkeit ist wesentlich besser als bei den bekannten Formmassen. Von besonderem Vorteil ist die gute Verarbeitbarkeit und die Fließfähigkeit.

Dementsprechend eignen sich die obigen Formmassen zur Herstellung von Formkörpern aller Art wie Fasern, Folien und Spritzgußartikeln.

Beispiele

A) Herstellung der Einzelkomponenten (a) bis (c)

1. Polyamid a/1

Aus

| | |
|---|---|
| 18,3 kg (60 mol%) | Isophthalsäure, |
| 12,2 kg (40 mol%) | Terephthalsäure, |
| 30 kg (80 mol%) | Hexamethylendiamin in Form einer 57 %igen wäßrigen Lösung, |
| 8,7 kg (20 mol%) | Bis-[4-amino(methylcyclohexyl)]-methan, und |
| 43 kg | Wasser |

wurde bei 90 °C eine 50 %ige Salzlösung hergestellt. Diese Salzlösung wurde bei einer Temperatur von 90 °C mit einer Geschwindigkeit entsprechend einer Polyamidmenge von 3 kg/Std. mittels einer Dosierpumpe von unten in ein vertikal angeordnetes Rohr eingeleitet. Das Rohr war mit Raschigringen beschickt. Im ersten Drittel des Rohres wurde durch Aufheizen auf 285 °C das Lösungswasser sowie der größte Teil des bei der Reaktion freiwerdenden Wassers soweit verdampft, bis der Umsetzungsgrad 93 % betrug. Im restlichen Teil des Rohres wurden Wasserdämpfe und darin gelöstes Amin mit dem Präpolymeren intensiv

miteinander in Berührung gebracht. Die Temperatur betrug 285 bis 310 °C entsprechend einem Druck von 2 bis 8 bar; die Verweilzeit betrug 1 bis 10 min.

Das in der Vorkondensationszone enthaltene Gemisch aus Präkondensat und Wasserdampf wurde in einem Abscheider in Wasserdampf und Schmelze getrennt. Der im Abscheider abgetrennte Wasserdampf enthielt nur noch 0,05 Gew.% Hexamethylendiamin. Die Verweilzeit in der gesamten Anlage betrug 30 min.

Die Schmelze wurde im Ausgangsextruder entspannt und bei einer Verweilzeit von 1 min unter Wasseraustritt weiterkondensiert, in Form von Strängen ausgetragen und in einem Wasserbad verfestigt sowie granuliert.

Die Ausbeute an Polyamid betrug 3,5 kg $h^{-1}$ entsprechend einer Raum-Zeit-Ausbeute 1,1 kg $h^{-1}$ $Vol^{-1}$. Das erhaltene Polyamid a/1 wies einen Bishexamethylentriamingehalt von 22 bis 33 ppm auf.

Die relative Viskosität des Produktes a/1 gemessen in einer 1-vol%igen Lösung von 100 ml 96 gew %iger $H_2SO_4$ bei 25 °C betrug 1,67.

2. Herstellung eines Polyamides a/1′ (Vergleichsbeispiel)

| | |
|---|---|
| 11,7 kg (80 mol%) | einer 56 %igen wäßrigen Hexamethylendiaminlösung, |
| 2,9 kg (20 mol%) | Bis-[4-amino(cyclohexyl)]-methan, |
| 7 kg (60 mol%) | Isophthalsäure, |
| 4,6 kg (40 mol%) | Terephthalsäure und |
| 74 kg | Wasser |

wurden bei 90 °C zu einer 20 %igen Salzlösung umgesetzt.

Die Arbeitsweise entsprach Beispiel 1.

Die Ausbeute an Polyamid betrug 1,8 kg $h^{-1}$ entsprechend einer Raum-Zeit-Ausbeute von 0,6 kg•$h^{-1}$ $Vol^{-1}$. Die stündlich anfallende Wassermenge betrug 12 l. Die relative Viskosität des Produktes a/1′ gemessen in einer 1 vol.-%igen Lösung von 100 ml 96 gew.%ige $H_2SO_4$ bei 25 °C betrug 1,67.

3. Teilkristalline Polyamide (b)

Es wurden folgende handelsübliche Polykondensate verwendet:

| Polyamid | Bezeichnung | relative Viskosität*) | K-Wert**) |
|---|---|---|---|
| Polyamid-66 | b/1 | 3,4 | 82 |
| Polyamid-6 | b/2 | 3,3 | 80 |
| Polyamid-6 | b/3 | | 73 |

*) relative Viskosität gemessen bei 25 °C in einer 1 vol.%igen Lösung in 100 ml 96 gew.%iger $H_2SO_4$

**) K-Wert nach Fikentscher c = 1 g/100 ml $H_2SO_4$

4. Kautschukelastisches Polymerisat (c)

c/1 Emulsionspolymerisat

Ein Kern-Schalen-Polymerisat mit einem Kern aus

| | |
|---|---|
| 98 Gew.% | n-Butylacrylat und |
| 2 Gew.% | Dihydrodicyclopentadienylacrylat |

und einer Hülle aus

| | |
|---|---|
| 98,5 Gew.%<br>1,5 Gew.% | n-Butylacrylat und<br>Methacrylsäure |

wurde in an sich bekannter Weise durch Emulsionspolymerisation hergestellt. Das Kern-Schalen-Gewichtsverhältnis betrug 60:40.

Als Emulgator wurde das Natriumsalz einer $C_{12}$-$C_{18}$-Paraffinsulfonsäure und als Katalysator Kaliumpersulfat eingesetzt.

B) Herstellung verschiedener thermoplastischer Formmassen sowie die Eigenschaften der daraus hergestellten Formkörper

Die Komponenten (a) und (b) oder (a), (b) und (c) gemäß den vorstehenden Beispielen wurden in üblicher Weise gemischt und zu Festkörpern geformt. Die Festkörper wurden auf verschiedene Eigenschaften hin geprüft. Die Ergebnisse sind der Tabelle 1 zu entnehmen.

Indices Tabelle 1:

1) Restfeuchtegehalt der Formmasse 0,1 %.
Das Elastizitätsmodul zeigte keine Abhängigkeit vom Feuchtigkeitsgehalt. Dieses wurde an Formkörpern nach DIN 53 455 bestimmt.
2) zum Vergleich

Tabelle 1

| Beispiel | Zusammensetzung der Formmassen [Gew.%] a | b | c | Reiß-festigkeit [N/mm²] nach DIN 53455 | Bruch-dehnung [%] DIN 53455 | E-Modul [N/mm²] DIN 53455 | Kerbschlag-zähigkeit [kJ/m²] DIN 53453 | Lochkerb-schlag-zähigkeit [kJ/m²] DIN 53 453 | Schädi-gungs-arbeit $W_{50}$ [Nm] DIN 53433 |
|---|---|---|---|---|---|---|---|---|---|
| 1[1)] | 80 a/1 | 20 b/1 | - | 58 | 15 | 2059 | 35 | 100 | |
| 2[1)] | 80 a/1 | 20 b/2 | - | 82 | 4 | 3427 | 10 | 60 | |
| 3[2)] | 80 a/1' | 20 b/2 | - | 53 | 3 | 3125 | - | 19 | |
| 4 | 80 a/1 | - | 20 c/1 | 56 | 17 | 2300 | | | 32 |
| 5[2)] | 80 a/1' | - | 20 c/1 | 50 | 8 | 1900 | | | 17 |
| 6 | 64 a/1 | 16 b/2 | 20 c/1 | 61 | 19 | 2105 | | 35 | |
| 7[2)] | 64 a/1' | 16 b/2 | 20 c/1 | 58 | 15 | 2000 | | 24 | |

## Patentansprüche

**1.** Thermoplastische Formmassen, enthaltend

a) 2 bis 95 Gew.% eines amorphen teilaromatischen Copolyamids mit einer relativen Viskosität von

1,4 bis 3,4 (1-vol.%ige Lösung in 96-gew.%iger Schwefelsäure bei 23°C) aus

α) 30 bis 98 mol-% Isophthalsäure und
β) 2 bis 70 mol-% Terephthalsäure einerseits und
γ) 40 bis 98 mol-% Hexamethylendiamin und
δ) 2 bis 60 mol-% eines Bis-[4-amino(alkylcyclohexyl)]methans oder eines Bis-[4-amino-(alkylcyclohexyl)]-2,2-propans andererseits.

b) 5 bis 98 Gew.% eines thermoplastischen teilkristallinen Polyamids und
c) 0 bis 60 Gew.% eines kautschukelastischen Polymeren.

**2.** Thermoplastische Formmassen nach Anspruch 1, in denen die Komponente a) aus

α) 30 bis 70 mol-% Isophthalsäure und
β) 30 bis 70 mol-% Terephthalsäure einerseits und
γ) 60 bis 90 mol-% Hexamethylendiamin und
δ) 10 bis 40 mol-% eines Bis-[4-amino(alkylcyclohexyl)]methans oder eines Bis-[4-amino-(alkylcyclohexyl)]-2,2-propans andererseits aufgebaut ist.

**3.** Thermoplastische Formmassen nach den Ansprüchen 1 oder 2, enthaltend pro kg zusätzlich bis zu 0,5 kg faser- oder teilchenförmige Füllstoffe oder deren Mischungen.

**4.** Verfahren zur Herstellung von Formteilen, dadurch gekennzeichnet, daß man hierzu die thermoplastischen Formmassen gemäß den Ansprüchen 1 bis 3 verwendet.

**5.** Formteile aus den thermoplastischen Formmassen gemäß den Ansprüchen 1 bis 3.

## Claims

**1.** A thermoplastic molding material containing

a) from 2 to 95% by weight of an amorphous, partly aromatic copolyamide having a relative viscosity of from 1.4 to 3.4 (1% strength by volume solution in 96% strength by weight sulfuric acid at 23°C) of

α) from 30 to 98 mol % of isophthalic acid and
β) from 2 to 70 mol % of terephthalic acid on the one hand and
γ) from 40 to 98 mol % of hexamethylenediamine and
δ) from 2 to 60 mol % of a bis-[4-aminoalkylcyclohexyl]-methane or of a 2,2-bis-[4-aminoalkylcyclohexyl]-propane on the other hand,

b) from 5 to 98% by weight of a thermoplastic, partially crystalline polyamide and
c) from 0 to 60% by weight of an elastomeric polymer.

**2.** A thermoplastic molding material as claimed in claim 1, in which component a) consists of

α) from 30 to 70 mol % of isophthalic acid and
β) from 30 to 70 mol % of terephthalic acid on the one hand and
γ) from 60 to 90 mol % of hexamethylenediamine and
δ) from 10 to 40 mol % of a bis-[4-aminoalkylcyclohexyl]-methane or of a 2,2-bis-[4-aminoalkylcyclohexyl]-propane on the other hand.

**3.** A thermoplastic molding material as claimed in claim 1 or 2, additionally containing not more than 0.5 kg of fibrous or particulate fillers, or a mixture of these, per kg.

**4.** A process for the production of moldings, wherein a thermoplastic molding material as claimed in any of claims 1 to 3 is used for this purpose.

**5.** A molding consisting of a thermoplastic molding material as claimed in any of claims 1 to 3.

## Revendications

**1.** Matières à mouler thermoplastiques, qui contiennent

a) 2 à 95% en poids d'un copolyamide partiellement aromatique, amorphe, d'une viscosité relative de 1,4 à 3,4 (solution à 1% en volume dans de l'acide sulfurique à 96% en poids, à 23°C) constitué

de

- α) 30 à 98% molaires d'acide isophtalique et
- β) 2 à 70% molaires d'acide téréphtalique, d'une part et
- γ) 40 à 98% molaires d'hexaméthylènediamine et
- δ) 2 à 60% molaires d'un bis-[4-amino(alkylcyclohexyl)]méthane un d'un bis[4-amino(alkylcyclohexyl)]-2,2-propane, d'autre part

b) 5 à 98% en poids d'un polyamide partiellement cristallin, thermoplastique et

c) 0 à 60% en poids d'un polymère présentant l'élasticité du caoutchouc.

**2.** Matières à mouler thermoplastiques selon la revendication 1, dans lesquelles le composant a) est constitué de

- α) 30 à 70% molaires d'acide isophtalique et
- β) 30 à 70% molaires d'acide téréphtalique, d'une part et
- γ) 60 à 90% molaires d'hexaméthylènediamine et
- δ) 10 à 40% molaires d'un bis-[4-amino(alkylcyclohexyl)]méthane un d'un bis[4-amino(alkylcyclohexyl)]-2,2-propane, d'autre part.

**3.** Matières à mouler thermoplastiques suivant la revendication 1 ou 2, qui contiennent complémentairement, par kg, jusqu'à 0,5 kg de charges fibreuses ou particulaires, ou de leurs mélanges.

**4.** Procédé de fabrication d'articles moulés, caractérisé en ce que l'on utilise à cette fin les matières à mouler thermoplastiques selon l'une quelconque des revendications 1 à 3.

**5.** Articles moulés réalisés en les matières à mouler thermoplastiques suivant l'une quelconque des revendications 1 à 3.